# EUROPÄISCHE PATENTANMELDUNG

(11) **EP 4 789 955 A1**
(43) Veröffentlichungstag der Anmeldung: **12.08.2026**
(21) Anmeldenummer: 26152560.4
(22) Anmeldetag: 19.01.2026
(51) Int. Cl.: B62J 6/028, B62J 6/04, B62J 6/057, B62J 6/26, B62J 45/41

(54) **VERFAHREN ZUR WARNBELEUCHTUNG AN EINEM FAHRRAD UND WARNLEUCHTVORRICHTUNG FÜR EIN FAHRRAD**

(30) Priorität: 10.02.2025 DE 102025104736
(71) Anmelder: Canyon Bicycles GmbH, 56073 Koblenz (DE)
(72) Erfinder: Casas Melo, Victor Fernando, 56068 Koblenz (DE)
(74) Vertreter: dompatent

(57) **Zusammenfassung**

Die Erfindung betrifft ein Verfahren zur Warnbeleuchtung an einem Fahrrad (100), mit den Schritten: Erfassen einer Position eines hinter dem Fahrrad (100) fahrenden Fahrzeugs (110) relativ zum Fahrrad (100) mittels einer am Fahrrad (100) angeordneten Erfassungsvorrichtung (14), und Änderung der Intensität einer rückwärtig weisenden Beleuchtung am Fahrrad (100) basierend auf der erfassten Position. Ferner umfasst die Erfindung ein System zur Datenverarbeitung, eine Warnleuchtvorrichtung (10) für ein Fahrrad (100), ein Fahrrad (100), ein Computerprogramm und ein computerlesbares Speichermedium.

## Beschreibung

Die Erfindung betrifft ein Verfahren zur Warnbeleuchtung an einem Fahrrad und eine Warnleuchtvorrichtung für ein Fahrrad.

Fahrräder sind im Straßenverkehr besonders gefährdet, da sie schmal, oft schwer sichtbar und ungeschützt sind. Gefährlich wird es vor allem bei von hinten kommenden und überholenden Fahrzeugen, da diese häufig zu dicht am Radfahrer vorbeifahren oder die Geschwindigkeit und Fahrdynamik des Fahrrads unterschätzen. Dies kann zu kritischen Situationen wie einem Auffahren, seitlichen Kollisionen oder gefährlichem Ausscheren führen, insbesondere bei schlechten Sichtverhältnissen oder hohen Geschwindigkeiten der überholenden Fahrzeuge.

Zur Erhöhung der Sichtbarkeit und Sicherheit von Radfahrern im Straßenverkehr existieren Ansätze zur Erhöhung der Sichtbarkeit und Sicherheit. Dabei kommen insbesondere statische Rücklichter oder einfache Blinksysteme zum Einsatz, die lediglich die Präsenz des Fahrrads anzeigen. Problematisch an blinkenden Warnlichtern ist z. B., dass diese laut der deutschen Straßenverkehrs-Zulassungs-Ordnung (StVZO) nicht zugelassen sind.

Aufgabe der Erfindung ist es, ein Verfahren zur Warnbeleuchtung an einem Fahrrad und eine Warnleuchtvorrichtung für ein Fahrrad zu schaffen, wobei die Sichtbarkeit von Radfahrern im Straßenverkehr verbessert ist.

Die Lösung der Aufgabe erfolgt erfindungsgemäß durch ein Verfahren zur Warnbeleuchtung an einem Fahrrad gemäß Anspruch 1 und eine Warnleuchtvorrichtung für ein Fahrrad gemäß Anspruch 14.

Bei dem erfindungsgemäßen Verfahren zur Warnbeleuchtung an einem Fahrrad handelt es sich insbesondere um ein Verfahren zur Abgabe von Warnlicht an dem Fahrrad an andere Verkehrsteilnehmer, bevorzugt an Kraftfahrzeuge, besonders bevorzugt an rückwärtig zu dem Fahrrad fahrende Kraftfahrzeuge. Das Verfahren weist den Schritt des Erfassens einer, insbesondere relativen, Position und insbesondere eine Positionsänderung eines hinter dem Fahrrad fahrenden Fahrzeugs relativ zum Fahrrad mittels einer am Fahrrad angeordneten Erfassungsvorrichtung auf. Ferner weist das Verfahren den weiteren Schritt der Änderung der Intensität einer rückwärtig weisenden Beleuchtung am Fahrrad, insbesondere des Rücklichts des Fahrrads, basierend auf der erfassten Position auf. Bei dem hinter dem Fahrrad fahrenden Fahrzeug handelt es sich insbesondere um das abstandsnächste Fahrzeug zum Fahrrad. Sofern somit mehrere Fahrzeuge hinter dem Fahrrad fahren, wird die Position das nächsten Fahrzeugs hinter dem Fahrrad erfasst. Bei dem Fahrzeug handelt es sich insbesondere um ein Kraftfahrzeug, bspw. einen PKW oder LKW. Vorzugsweise ist das Verfahren und/oder die Erfassungsvorrichtung auf die Erfassung von Kraftfahrzeugen beschränkt. Zur Abgabe der Beleuchtung weist das Fahrrad insbesondere eine Leuchte, vorzugsweise eine Rückleuchte auf. Die Leuchte kann bspw. mindestens eine LED aufweisen. Die Leuchte gibt vorzugsweise rotes Licht ab. Bevorzugt gibt die Leuchte ein Rücklicht ab. Die Leuchte weist insbesondere eine Dimmfunktion zur Abgabe von Licht in unterschiedlichen Intensitäten auf. Die Abgabe unterschiedlicher Intensitäten, insbesondere die Dimmfunktion, kann bspw. durch eine Regulierung der Spannung, Anpassung der Stromstärke, Verwendung einer Pulsweitenmodulation (PWM) und/oder Steuerung des Stromflusses über Phasenanschnitt- und/oder Phasenabschnitt-Technologie erfolgen. Alternativ oder zusätzlich können bei einer Leuchte mit mehreren Leuchtmitteln, bspw. mehreren LED, einzelne Leuchtmittel aktiviert oder deaktiviert werden.

Es ist bevorzugt, dass bei der Änderung der Intensität, die Beleuchtung von einer hellen zu einer dunkleren Beleuchtungsintensität oder von einer dunklen zu einer helleren Beleuchtungsintensität geändert wird. Insbesondere sind somit mindestens zwei Beleuchtungsintensitäten I₁ und I₂ der Beleuchtung umgesetzt, wobei bei I₁ das von der Beleuchtung abgegebene Licht eine geringere Intensität aufweist als bei I₂. I₁ entspricht demnach insbesondere einem dunklen Lichtmodus und I₂ entspricht einem hellen Lichtmodus. Vorzugsweise erfolgt bei der Änderung der Intensität der Beleuchtung eine Änderung der Lichtmenge und/oder des Lichtstroms (in Im), wobei es bevorzugt ist, dass die Lichtmenge und/oder der Lichtstrom, vorzugsweise in allen Änderungszuständen ≠ 0 ist. Bei der Änderung der Intensität der Beleuchtung handelt es sich insbesondere um eine einmalige Änderung der Intensität, insbesondere eine einmalige Änderung der Intensität für mindestens einen definierte Positionszustand, bspw. Abstandszustand, der erfassten Position. Zusätzlich oder alternativ ist es insbesondere möglich, dass bei der Änderung der Intensität der Beleuchtung ein Pulsieren der Beleuchtung erfolgt. Bei dem Pulsieren handelt es sich insbesondere um eine fortwährende Änderung der Intensität der rückwärtig weisenden Beleuchtung des Fahrrads. Insbesondere leuchtet die Beleuchtung bei dem helleren und dem dunkleren Beleuchtungszustand und/oder beim gesamten Pulsiervorgang, sodass hierbei stets eine Lichtmenge abgegeben wird. Durch die Änderung der Beleuchtungsintensität ist insbesondere eine mit der StVZO konforme Warnfunktion umgesetzt, vorzugsweise ohne dass es zu einem Blinken kommt.

Es ist bevorzugt, dass die Erfassungsvorrichtung die Geschwindigkeit vᵥₑₕ des Fahrzeugs, die Geschwindigkeit v_{bike} des Fahrrads und/oder eine Relativgeschwindigkeit vᵣₑₗ zwischen Fahrrad und Fahrzeug erfasst. Besonders bevorzugt wird eine Änderung der von vᵥₑₕ, v_{bike} und/oder vᵣₑₗ erfasst.

Es ist bevorzugt, dass die Erfassungsvorrichtung den, insbesondere rückwärtigen, Relativabstand dᵣₑₗ von Fahrzeug und Fahrrad und bevorzugt eine Abstandsänderung erfasst. Besonders bevorzugt wird kontinuierlich die Abstandsänderung erfasst. Möglich ist es insbesondere, dass die Erfassungsvorrichtung zusätzlich oder alternativ die Geschwindigkeit des Fahrzeugs, vorzugsweise relativ zum Fahrrad, erfasst. Im Rahmen der vorliegenden Offenbarung umfasst die erfasste Position somit insbesondere den Relativabstand dᵣₑₗ und/oder die Relativgeschwindigkeit vᵣₑₗ.

Es ist bevorzugt, dass bei Erfassung eines Abstands des Fahrzeugs zum Fahrrad, der kleiner ist als ein Normalbremsweg des Fahrzeugs, eine Änderung der Intensität der Beleuchtung erfolgt. Insbesondere erfolgt bei Erfassung eines Wechsels zwischen
Zustand i: ${d}_{rel} \geq {s}_{norm} + {b}_{norm} ,$ und
Zustand ii: ${d}_{rel} < {s}_{norm} + {b}_{norm} ,$
eine Änderung der Intensität der Beleuchtung, wobei
sₙₒᵣₘ ein Normalbremsweg des Fahrzeugs, und
bₙₒᵣₘ ein Sicherheitspuffer für den Normalbremsweg des Fahrzeugs ist.

Dieser Wechsel entspricht insbesondere einem definierten Positionszustand, sodass bei einem Wechsel, vorzugsweise jedem Wechsel, es bevorzugt ist, dass eine einmalige Änderung der Intensität der Beleuchtung erfolgt. Bevorzugt erfolgt bei einem, insbesondere jedem, Wechsel von Zustand i. zu Zustand ii. und/oder umgekehrt eine Änderung der Intensität der Beleuchtung. Beim Wechsel von Zustand i. zu Zustand ii. erfolgt insbesondere eine Änderung der Beleuchtungsintensität von I₁ zu I₂. Beim Wechsel von Zustand ii. zu Zustand i. erfolgt insbesondere eine Änderung der Beleuchtungsintensität von I₂ zu I₁. Bei Erfassung von dᵣₑₗ ≥ sₙₒᵣₘ + bₙₒᵣₘ erfolgt insbesondere eine Einstellung auf Intensität I₁. Bei Erfassung von dᵣₑₗ < sₙₒᵣₘ + bₙₒᵣₘ erfolgt insbesondere eine Einstellung auf Intensität l₂. Der Normalbremsweg sₙₒᵣₘ, insbesondere in m, ist z. B.: sₙₒᵣₘ = (Geschwindigkeit vᵥₑₕ insbesondere Relativgeschwindigkeit vᵣₑₗ des Fahrzeugs in km/h : 10) x (Geschwindigkeit vᵥₑₕ insbesondere Relativegeschwindigkeit vᵣₑₗ des Fahrzeugs in km/h : 10). Der Sicherheitspuffer bₙₒᵣₘ kann bspw. ein festgelegter Wert, insbesondere in m, sein. Möglich ist es insbesondere auch, dass bₙₒᵣₘ sein Faktor von sₙₒᵣₘ ist, z. B. ${b}_{norm} = {s}_{norm} * x ,$ wobei x 200% bis 1%, bevorzugt 100% bis 5%, besonders bevorzugt 50 % bis 10 % ist. bnorm kann z. B. 0 sein.

Alternativ kann bₙₒᵣₘ insbesondere durch den Reaktionsweg ersetzt werden. Gegeben 1 Sekunde Reaktionszeit ist der Reaktionsweg z. B.: (Geschwindigkeit vᵥₑₕ insbesondere Relativgeschwindigkeit vᵣₑₗ des Fahrzeugs in km/h : 10)*3.

Es ist bevorzugt, dass bei Erfassung eines Abstands des Fahrzeugs zum Fahrrad, der kleiner ist als ein Gefahrbremsweg des Fahrzeugs, eine Änderung der Intensität der Beleuchtung erfolgt. Insbesondere erfolgt bei Erfassung eines Wechsels zwischen
Zustand iii: ${s}_{norm} + {b}_{norm} > {d}_{rel} \geq {s}_{hazard} + {b}_{hazard} ,$ und
Zustand iv: ${d}_{rel} < {s}_{hazard} + {b}_{hazard} ,$
eine Änderung der Intensität der Beleuchtung, wobei
s_{hazard} ein Gefahrbremsweg des Fahrzeugs, und
b_{hazard} ein Sicherheitspuffer für den Gefahrbremsweg des Fahrzeugs ist.

Bevorzugt erfolgt bei einem, insbesondere jedem, Wechsel von Zustand iii. zu Zustand iv. und/oder umgekehrt eine Änderung der Intensität der Beleuchtung. Bei Erfassung von dᵣₑₗ < Sₙₒᵣₘ + bₙₒᵣₘ und Erfassung von drei ≥ s_{hazard} + b_{hazard} erfolgt insbesondere eine Einstellung auf Intensität I₂. Bevorzugt gilt: s_{hazard} + b_{hazard} < sₙₒᵣₘ + bₙₒᵣₘ. Z. B. gilt: b_{hazard} < bₙₒᵣₘ. Der Gefahrbremsweg s_{hazard}, insbesondere in m, ist z. B.:
s_{hazard} = ((Geschwindigkeit vᵥₑₕ insbesondere Relativgeschwindigkeit vᵣₑₗ des Fahrzeugs in km/h : 10) x (Geschwindigkeit vᵥₑₕ insbesondere Relativgeschwindigkeit vᵣₑₗ des Fahrzeugs in km/h : 10)) / 2. Der Sicherheitspuffer b_{hazard} kann bspw. ein festgelegter Wert, insbesondere in m, sein. Möglich ist es insbesondere auch, dass b_{hazard} sein Faktor von s_{hazard} ist, z. B.

b_{hazard} = s_{hazard} * x, wobei
x 200% bis 1%, bevorzugt 100% bis 5%, besonders bevorzugt 50 % bis 10 % ist. b_{hazard} kann z. B. 0 sein.

Alternativ kann bₙₒᵣₘ insbesondere durch den Reaktionsweg ersetzt werden. Gegeben 1 Sekunde Reaktionszeit ist der Reaktionsweg z.B.: (Geschwindigkeit vᵥₑₕ insbesondere Relativgeschwindigkeit vᵣₑₗ des Fahrzeugs in km/h : 10)*3.

Alternativ oder zusätzlich zur Verwendung der Geschwindigkeit vᵥₑₕ insbesondere Relativgeschwindigkeit vᵣₑₗ, kann zur Einstellung der Beleuchtung eine potenzielle Zeit bis zur Kollision ttc (time to collision) benutzt werden. Der ttc-Wert für der Einstellung der Intensität kann insbesondere mit dem bₙₒᵣₘ- oder/und mit dem b_{hazard}-Wert sowie der relativen Geschwindigkeit vᵣₑₗ berechnet werden. Es gilt z. B.: $ttc = {d}_{rel} / {v}_{rel} ,$ ${ttc}_{bnorm} = {b}_{norm} / {v}_{rel} ,$ ${ttc}_{bhazard} = {b}_{hazard} / {v}_{rel} ,$
Zustand i: $ttc \geq {ttc}_{bnorm} ,$
Zustand ii: $ttc < {ttc}_{bnorm} ,$
Zustand iii: ${ttc}_{bnorm} > ttc \geq {ttc}_{bhazard} ,$ und/oder
Zustand iv: $ttc < {ttc}_{bhazard} .$

Es ist bevorzugt, dass bei einem Bremsen des Fahrrads (x_{break} = true) eine Änderung der Intensität der Beleuchtung erfolgt. Möglich ist es insbesondere, dass diese Änderung der Intensität der Beleuchtung lediglich für die Dauer des Bremsvorgangs erfolgt und somit insbesondere sodann ein Zurücksetzen auf die vorherige Intensität erfolgt. Diese auf den Bremsvorgang beschränkte Änderung der Intensität ist insbesondere umgesetzt, wenn die Ausgangsintensität vor dem Bremsvorgang der dunkleren Intensität I₁ entspricht. Zusätzlich oder alternativ ist es insbesondere möglich, dass diese Änderung der Intensität der Beleuchtung lediglich kurzfristig, insbesondere für eine vordefinierte Zeit Δt erfolgt. Δt liegt bevorzugt zwischen 5 s bis 0,01 s, besonders bevorzugt zwischen 1 s bis 0,05 s. Diese auf eine vordefinierte Zeit beschränkte Änderung der Intensität ist insbesondere umgesetzt, wenn die Ausgangsintensität vor dem Bremsvorgang der helleren Intensität I₂ entspricht. Bei der Änderung erfolgt hierbei somit insbesondere eine kurzfristige Änderung, vorzugsweise von I_{2 auf} I₁. Nach der zeitlich beschränkten Änderung wird die Intensität insbesondere wieder auf die Ausgangsintensität gesetzt. Mit anderen Worten erfolgt ein kurzfristiges Abdunkeln der Beleuchtung. Durch das kurzfristige Abdunkeln ist insbesondere durch das anschließende hellere Leuchten erneut eine Warnfunktion bzgl. des Bremsens umgesetzt.

Es ist bevorzugt, dass bei einer Erfassung von dᵣₑₗ < s_{hazard} + b_{hazard}, und/oder während eines Bremsvorgangs des Fahrrads wobei
sₙₒᵣₘ ein Gefahrbremsweg des Fahrzeugs, und
bₙₒᵣₘ ein Sicherheitspuffer für den Gefahrbremsweg des Fahrzeugs ist,
ein Pulsieren oder ein Blinken der Beleuchtung erfolgt.

Möglich ist es insbesondere, dass das Vorliegen des Bremsvorgangs durch Erfassung, bspw. mittels eines Sensors, erfolgt. Z. B. kann der Bremsvorgang erfasst werden durch einen Sensor, der die Betätigung des Bremsauslösers, z. B. die Betätigung des Bremshebels, erfasst und/oder durch einen Beschleunigungssensor, der die Beschleunigung des Fahrrads erfasst. Die Beengung und/oder das Nichtvorliegen eines Bremsvorgangs kann insbesondere ebenfalls erfasst werden. Beim Wechsel von Zustand iii. zu Zustand iv. erfolgt insbesondere ein Pulsieren oder ein Blinken der Beleuchtung. Beim Wechsel von Zustand iv. zu Zustand iii. erfolgt insbesondere eine Einstellung der Beleuchtungsintensität auf I₂. Bei einem Blinken wird die Beleuchtung vorzugweise zeitweise abgeschaltet, sodass zeitweise keine Lichtabgabe erfolgt. Anstelle des Pulsierens oder Blinkens ist es bspw. auch möglich, dass beim Bremsvorgang des Fahrrads und/oder bei Erfassung von dᵣₑₗ < s_{hazard} + b_{hazard}, eine Änderung der Beleuchtung auf eine noch hellere Intensität I₃ als die helle Intensität I₂ erfolgt.

Es ist bevorzugt, dass bei einem Wechsel des erfassten abstandsnächsten Fahrzeugs zum Fahrrad zu einem anderen Fahrzeug, dass sodann dem abstandsnächsten Fahrzeug entspricht, eine, insbesondere kurzfristige, Änderung der Intensität der Beleuchtung erfolgt. z. B. kann es beim Überholen des nächsten Fahrzeugs dazu kommen, dass sodann ein anderes Fahrzeug, das rückwärtig zum Fahrrad fährt, dem neuen zu erfassenden abstandsnächsten Fahrzeug entspricht. Zur Warnung dieses Fahrzeugs ist es bevorzugt, dass eine insbesondere kurzfristige Änderung der Intensität der Beleuchtung erfolgt.

Vorzugsweise weist das Verfahren den weiteren Schritt auf: Erfassung, ob hinter dem Fahrrad ein oder mehrere Fahrzeuge fahren (xᵥₑₕ = true). Die Erfassung, ob hinter dem Fahrrad ein oder mehrere Fahrzeuge fahren, umfasst insbesondere die Erfassung, ob mit einem Abstand von max. 300 m (bspw. dᵣₑₗ ≥ 300 m), bevorzugt max. 200 m (bspw. dᵣₑₗ ≥ 200 m), besonders bevorzugt max. 100 m (bspw. dᵣₑₗ ≥ 100 m) hinter dem Fahrrad mindestens ein Fahrzeug fährt. Bei Nichterfassung eines Fahrzeugs hinter dem Fahrrad (xᵥₑₕ = false) ist es bevorzugt, dass eine Beleuchtungsintensität von I₁ eingestellt wird. Insbesondere umfasst das Verfahren ferner den Schritt der Erfassung des abstandsnächsten Fahrzeugs hinter dem Fahrrad.

Es ist bevorzugt, dass das Verfahren umfasst, dass bei Vorliegen eines oder mehrere der folgenden Zustände eine entsprechende Beleuchtung erfolgt:

| **Zustand** | **Beleuchtung** |
|---|---|
| dᵣₑₗ ≥ sₙₒᵣₘ + bₙₒᵣₘ | Intensität I₁ |
| xᵥₑₕ = false | Intensität I₁ |
| dᵣₑₗ < sₙₒᵣₘ + bₙₒᵣₘ | Intensität I₂ |
| dᵣₑₗ < sₙₒᵣₘ + bₙₒᵣₘ AND dᵣₑₗ ≥ s_{hazard} + b_{hazard} | Intensität I₂ |
| dᵣₑₗ < s_{hazard} + b_{hazard} | Pulsieren oder Blinken; oder Intensität I₃ |
| x_{break} = true AND | Intensität I₂ |
| Beleuchtungsintensität = I₁; und/oder | |
| x_{break} = true AND | |
| dᵣₑₗ ≥ sₙₒᵣₘ + bₙₒᵣₘ; und/oder | |
| x_{break} = true AND | |
| xᵥₑₕ = false | |
| x_{break} = true AND | Intensität I₁ → Δt → Intensität I₂; oder Intensität I₃ |
| Beleuchtungsintensität = I₂; und/oder | |
| x_{break} = true AND | |
| dᵣₑₗ < sₙₒᵣₘ + bₙₒᵣₘ AND dᵣₑₗ ≥ s_{hazard} + b_{hazard} | |
| x_{break} = false AND | Intensität I₁ |
| dᵣₑₗ ≥ sₙₒᵣₘ + bₙₒᵣₘ; und/oder | |
| x_{break} = false AND | |
| xᵥₑₕ = false | |
| x_{break} = false AND drei < Snorm + bₙₒᵣₘ AND dᵣₑₗ ≥ s_{hazard} + b_{hazard} | Intensität I₂ |
| Wechsel des erfassten abstandsnächstes Fahrzeugs AND Beleuchtungsintensität = I₂ | Intensität I₁ |

Von den vorstehenden Bedingungen können insbesondere eine oder mehrere in dem Verfahren umgesetzt sein, wobei eine alternative oder kumulierte Kombination (und/oder) der Bedingungen möglich ist. Bspw. kann die Intensität l₁ eingestellt werden, wenn dᵣₑₗ ≥ sₙₒᵣₘ + bₙₒᵣₘ und/oder xᵥₑₕ = false, sodass sich z. B. die Bedingung ergibt: IF dᵣₑₗ ≥ sₙₒᵣₘ + bₙₒᵣₘ THEN Intensität l₁; oder IF xᵥₑₕ = false THEN Intensität l₁; oder IF dᵣₑₗ ≥ sₙₒᵣₘ + bₙₒᵣₘ AND xᵥₑₕ = false THEN Intensität I₁.

Es ist bevorzugt, dass die Erfassungsvorrichtung den seitlichen Abstand der Fahrspur des Fahrzeugs zur Fahrspur des Fahrrads und/oder den seitlichen Abstand des Fahrzeugs zum Fahrrad erfasst. Insbesondere kann das Verfahren umfassen, dass basierend auf dem erfassten Seitenabstand eine Anpassung der Intensität der Beleuchtung erfolgt oder unterbleibt. Sofern somit bspw. das Fahrzeug einen ausreichenden Seitenabstand aufweist, kann somit ein Warnen des Fahrzeugs durch Änderung der Intensität unterbleiben. Bevorzugt ist es, dass der Winkel der Fahrspuren zueinander und/oder der Winkel zwischen Fahrzeug und Fahrrad erfasst wird. Die Fahrspur des Fahrzeugs weist insbesondere eine Breite auf, die der Fahrzeugbreite entspricht. Die Fahrspur des Fahrrads weist insbesondere eine Breite auf, die der Fahrradbreite entspricht. Die Fahrradbreite ist insbesondere ein festgelegter Wert, bspw. zwischen 1,5 bis 0,5 m. Sofern der Winkel bspw. 0° beträgt, bedeutet das z. B., dass das Fahrzeug genau hinter dem Fahrrad fährt. Ein anderer Winkel, insbesondere ein Winkel > 0° oder > 1° oder > 3° und/oder < 0° oder < - 1° oder < -3°, vorzugsweise in Kombination mit einem relativen Abstand bedeutet, dass das Fahrzeug mit ausreichend seitlichem Abstand zum Fahrrad überholen kann, wobei hierbei insbesondere eine Änderung der Intensität der Beleuchtung unterbleibt. Gilt z. B. (dᵣₑₗ * tg(θ))-(Breiteᵥₑₕ : 2)-(Breite_{bike} : 2) > 2 m oder 1.5 m, wobei θ der Winkel der Fahrspuren zueinander und/oder der Winkel zwischen Fahrzeug und Fahrrad, Breiteᵥₑₕ die Breite des Fahrzeugs und Breite_{bike} die Breite des Fahrrads ist, so unterbleibt insbesondere eine Änderung der Intensität der Beleuchtung.

Es ist bevorzugt, dass bei Erfassung eines Abstands der Fahrspuren zueinander ≥ eines Mindestabstands, insbesondere von 2 m oder 1,5 m, eine Änderung der Intensität der Beleuchtung unterbleibt. Möglich ist es insbesondere, dass basierend auf dem erfassten Seitenabstand, insbesondere von 2 m oder 1,5 m, ein Wechsel des erfassten abstandsnächsten Fahrzeugs erfolgt.

Es ist bevorzugt, dass das Verfahren den weiteren Schritt der Übermittlung der erfassten Position, vorzugsweise an den Benutzer des Fahrrads, aufweist. Insbesondere erfolgt eine Übermittlung der erfassten Position an ein Mobilgerät des Benutzers und/oder an ein Lenkerfeedbacksystem des Fahrrads. Bei dem Mobilgerät handelt es sich bspw. um eine Smartwatch oder ein Mobiltelefon. Bei dem Lenkerfeedbacksystem handelt es sich bspw. um ein Feedbacksystem, das mit dem Lenker, insbesondere mindestens einem Griff, des Fahrrads verbunden, vorzugsweise darin integriert ist. Das Feedbacksystem und/oder das Mobilgerät gibt basierend auf der übermittelten Position insbesondere ein akustisches und/oder optisches und/oder haptisches Feedback ab. Möglich ist es insbesondere, dass das Feedback an den Radfahrer nach demselben Prinzip wie zur Aktivierung des Lichts erfolgt. Bspw. kann der Radfahrer gewarnt werden, wenn ein Fahrzeug hinter der Fahrrad mit dᵣₑₗ < sₙₒᵣₘ + bₙₒᵣₘ fährt und/oder den seitlichen Abstand beim Überholen nicht einhalten kann. Vorzugsweise erfolgt ein Feedback an den Radfahrer, wenn ein Licht mit Intensität I2 und/oder mit Intensität I3 und/oder ein Pulsieren und/oder ein Blinken abgegeben wird.

Es ist bevorzugt, dass die Erfassungsvorrichtung zur Erfassung der Position des Fahrzeugs mindestens einen Sensor, wie bspw. einen Radar-Sensor, einen Ultraschall-Sensor, einen Lidar-Sensor, eine Kamera, und/oder einen Infrarot-Sensor aufweist. Der mindestens eine Sensor ist bevorzugt zur Erfassung des Abstands, und besonders bevorzugt der Abstandsänderung zwischen Fahrrad und Fahrzeug, ausgeführt. Möglich ist es insbesondere ferner, dass die Erfassungsvorrichtung, bspw. mittels des mindestens einen Sensors, die Geschwindigkeit des Fahrrads v_{bike} erfasst. Bspw. kann mit der Erfassungsvorrichtung die Geschwindigkeit des Fahrrads relativ zum Boden erfasst werden. Insbesondere kann über die Abstandsänderung und die Geschwindigkeit des Fahrrads v_{bike}, die Geschwindigkeit des Fahrzeugs vᵥₑₕ ermittelt werden.

Die Erfindung umfasst ferner ein System zur Datenverarbeitung, umfassend Mittel zur Ausführung des erfindungsgemäßen Verfahrens. Das System zur Datenverarbeitung weist insbesondere einen Prozessor, auf oder besteht daraus.

Weitergehend umfasst die Erfindung eine Warnleuchtvorrichtung für ein Fahrrad. Die Warnleuchtvorrichtung weist eine Erfassungsvorrichtung zum Erfassen einer Position eines hinter dem Fahrrad fahrenden Fahrzeugs relativ zum Fahrrad auf. Ferner weist die Warnleuchtvorrichtung eine Steuereinheit auf, die dazu eingerichtet ist die Intensität eines vom Fahrrad abgegebenes Licht, insbesondere Rücklicht, basierend auf der erfassten Position zu ändern. Bei der Steuereinheit handelt es sich insbesondere um ein erfindungsgemäßes System zur Datenverarbeitung. Vorzugsweise weist die Warnleuchtvorrichtung eine Leuchte, insbesondere eine Rückleuchte, zur Abgabe des Lichts auf. Die Warnleuchtvorrichtung ist insbesondere zur, vorzugsweise lösbaren, Montage an dem Fahrrad ausgeführt.

Es ist bevorzugt, dass die Warnleuchtvorrichtung ferner ein Gehäuse aufweist, wobei die Erfassungsvorrichtung, die Steuereinheit und die optional die Leuchte, zumindest teilweise, insbesondere vollständig, in dem Gehäuse angeordnet sind. Vorzugsweise ist das Gehäuse zur, insbesondere lösbaren, Montage mit dem Fahrrad ausgeführt, sodass durch das montierbare Gehäuse die Warnleuchtvorrichtung mit dem Fahrrad verbindbar ist. Die Warnleuchtvorrichtung, insbesondere das Gehäuse, weist vorzugsweise eine Fixiervorrichtung zur Montage der Warnleuchtvorrichtung an dem Fahrrad auf. Die Fixiervorrichtung kann insbesondere einen Schnellverschluss aufweisen. Bspw. weist die Fixiervorrichtung einen Riemen, ein Band, eine Schelle und/oder einen Magnet auf. Möglich ist es insbesondere, dass die Leuchte und das Gehäuse als separate Bauteile, bspw. als zwei getrennten Module, ausgeführt sind. Z. B. kann die Leuchte, insbesondere Rückleuchte, als eigenständige Einheit, insbesondere mit Bremsfunktion benutzt werden. Die Leuchte verfügt insbesondere über einen Eingang, um Informationen er Steuereinheit zu empfangen.

Die Erfindung umfasst ferner ein Fahrrad mit einer erfindungsgemäßen Warnleuchtvorrichtung. Die Warnleuchtvorrichtung, insbesondere das Gehäuse, ist, z. B. lösbar, mit dem Fahrrad vorzugsweise einem Rahmenelement des Fahrrads, verbunden oder in ein Rahmenelement des Fahrrads integriert. Bei dem Rahmenelement handelt es sich insbesondere um die Sattelstütze, die Sattelstrebe, das Sattelrohr, das Schutzblech oder den Gepäckträger des Fahrrads. Es ist bevorzugt, dass die Warnleuchtvorrichtung derart mit dem Fahrrad verbunden ist, dass durch die Warnleuchtvorrichtung ein rückwärtig leuchtendes Licht, insbesondere Rücklicht, abgegeben wird.

Die Erfindung umfasst ferner ein Computerprogramm, umfassend Befehle, die bei der Ausführung des Programms durch einen Computer diesen veranlassen, das erfindungsgemäße Verfahren auszuführen.

Die Erfindung umfasst ferner ein computerlesbares Speichermedium, wobei das Speichermedium Befehle umfasst, die bei der Ausführung durch einen Computer diesen veranlassen, das erfindungsgemäße Verfahren auszuführen, und/oder auf dem Speichermedium das erfindungsgemäße Computerprogramm gespeichert ist.

Es ist bevorzugt, dass einer oder mehrere erfindungsgemäße Gegenstände, also insbesondere das Verfahren, das System zur Datenverarbeitung, die Warnleuchtvorrichtung, das Fahrrad, das Computerprogramm und/oder das computerlesbare Speichermedium und, jeweils eines oder mehrere Merkmale der anderen erfindungsgemäßen Gegenstände aufweisen.

Nachfolgend wird die Erfindung anhand bevorzugter Ausführungsformen unter Bezugnahme auf die anliegenden Zeichnungen näher erläutert.

Es zeigen:
- Fig. 1: eine schematische, seitliche Darstellung eines Teils einer Ausführungsform eines erfindungsgemäßen Fahrrads mit einer Ausführungsform einer erfindungsgemäßen Warnleuchtvorrichtung,
- Fign. 2a-c: schematische Darstellungen einer Ausführungsform eines erfindungsgemäßen Fahrrads, und
- Fig. 3: ein Diagramm zur Darstellung einer Ausführungsform eines erfindungsgemäßen Verfahrens.

Identische oder ähnliche Elemente werden in den Figuren mit den gleichen Bezugszeichen identifiziert, wobei nicht in allen Figuren Bezugszeichen für die jeweiligen Elemente vorgesehen sind.

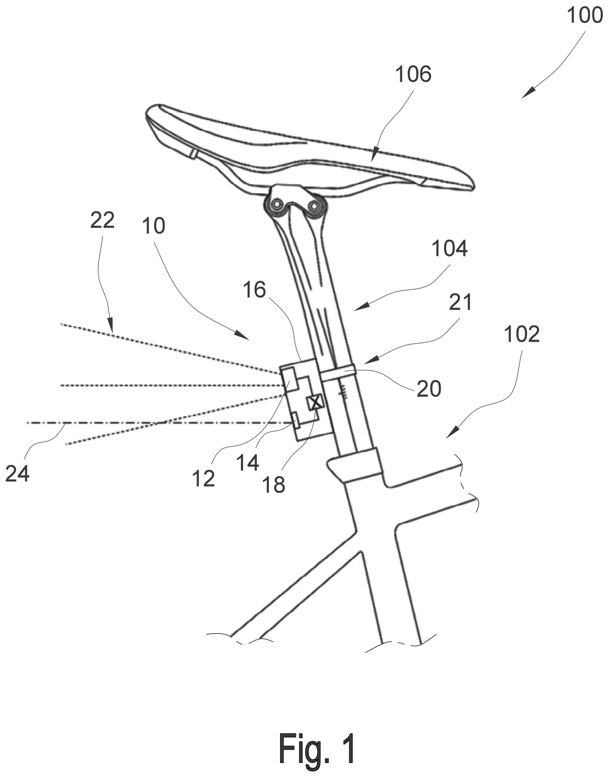

Figur 1 zeigt einen Teil einer Ausführungsform eines erfindungsgemäßen Fahrrads 100 mit einem Fahrradrahmen 102.

Mit der Sattelstütze 104 des Sattels 106 ist eine Ausführungsform einer erfindungsgemäßen Warnleuchtvorrichtung 10 verbunden. Die Verbindung der Warnleuchtvorrichtung 10 mit der Sattelstütze 104 erfolgt mittels einer mit einem Gehäuse 16 der Warnleuchtvorrichtung 10 verbundenen, ein Band 20 aufweisenden, Fixiervorrichtung 21.

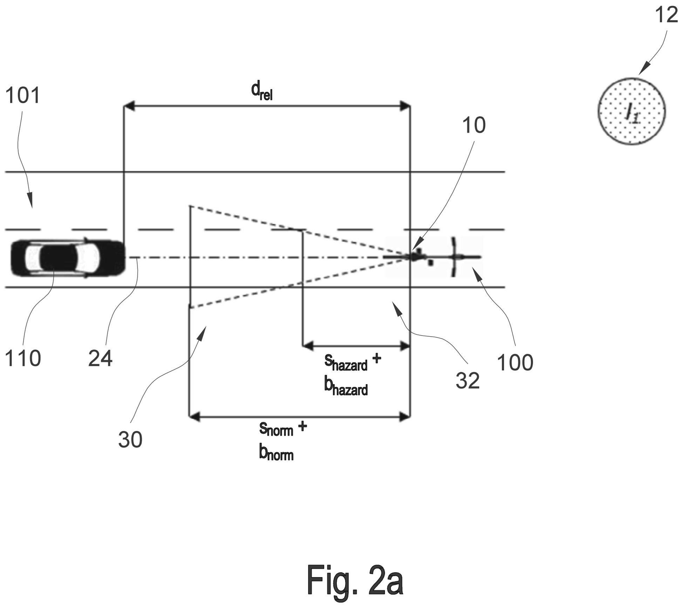

Die Warnleuchtvorrichtung 10 weist ferner eine in das Gehäuse 16 integrierte Leuchte 12 zur Abgabe eines Rücklichts 22, eine Erfassungsvorrichtung 14 zur Erfassung von eines hinter dem Fahrrad 100 fahrenden Fahrzeugs 110 (vgl. Fign. 2a-c) und eine mit der Leuchte 12 und der Erfassungsvorrichtung 14 zur Steuerung verbundene Steuerungseinheit 18 auf.

Die Leuchte 12 kann bspw. eine LED aufweisen. Die Leuchte gibt vorzugsweise rotes Licht 22 ab. Die Leuchte 12 ist zur Abgabe mehrere Lichtintensitäten ausgeführt. Insbesondere kann die Leuchte 12 mindestens Licht in einer dunkleren Lichtintensität I₁ sowie in einer helleren Lichtintensität I₂ abgeben. Die Leuchte 12 weist vorzugsweise eine Dimmfunktion auf.

Die Erfassungsvorrichtung 14 ist zur Erfassung eines Relativabstand dᵣₑₗ eines hinter dem Fahrrad 100 fahrenden Fahrzeugs 110 (vgl. Fig. 2a-c) und insbesondere zur Erfassung einer Abstandsänderung ausgeführt. Über die Abstandsänderung kann insbesondere, bspw. mittels der Steuereinheit 18, eine Relativgeschwindigkeit vᵣₑₗ zwischen dem Fahrrad 100 und dem nachfolgenden Fahrzeug 110 ermittelt werden. Optional ist es möglich, dass, zusätzlich die Geschwindigkeit des Fahrrads v_{bike}, bspw. über die Erfassungsvorrichtung 14 erfasst wird. Vorzugsweise weist die Erfassungsvorrichtung 14 einen Radar-Sensor, einen Ultraschall-Sensor, einen Lidar-Sensor, eine Kamera, und/oder einen Infrarot-Sensor zur Erfassung des Abstands, besonders bevorzugt der Abstandsänderung, und vorzugsweise zur Erfassung der Geschwindigkeit des Fahrrads v_{bike} auf. Bspw. kann ein Radar- oder Lidar-Sensor die Geschwindigkeit des Fahrrads relativ zum Boden, z. B. der Straße 101 (vgl. Fig. 2a) erfassen. Die Messsignale 24, bspw. Radar- und/oder Laserstrahlen, der Erfassungsvorrichtung 14 zur Erfassung des dem Fahrrad 100 nachfolgenden Fahrzeugs 110 sind schematisch mit Linie 24 dargestellt.

Figur 2a zeigt ein Fahrrad 100, bspw. ausgeführt gemäß Figur 1, mit einer Warnleuchtvorrichtung 10, bspw. ausgeführt gemäß Figur 1. Der Leuchtzustand der Leuchte 12, die das Rücklicht des Fahrrads 100 abgibt, ist zur Verdeutlichung oben rechts dargestellt.

Mittels der Erfassungsvorrichtung 14 wird der Relativabstand dᵣₑₗ zwischen Fahrrad 100 und dem nachfolgenden Fahrzeug 110 erfasst.

Im Ausgangszustand ist die Warnleuchtvorrichtung 10 insbesondere eingerichtet Rücklicht mit der dunkleren Lichtintensität I₁ abzugeben.

Dargestellt in Figur 2a ist der Relativabstand dᵣₑₗ größer als der Normalbremsweg des Fahrzeugs 110 sₙₒᵣₘ plus einem Sicherheitspuffer bₙₒᵣₘ für den Normalbremsweg des Fahrzeugs 110 (dᵣₑₗ ≥ sₙₒᵣₘ + bₙₒᵣₘ). Die Leuchte 12 gibt hierbei ebenfalls Rücklicht 22 mit der dunkleren Lichtintensität I₁ ab. Somit gibt die Leuchte 12 insbesondere ein Licht 22 ab, dass einem standardmäßigen Rücklicht entspricht.

Bevorzugt ist umgesetzt, dass beim Bremsen des Fahrrads 100 in dem Positionszustand aus Figur 2a Licht 22 von der Leuchte 12 mit der helleren Lichtintensität l₂ abgegeben wird, um auf das Bremsen hinzuweisen. Bei Beendung des Bremsvorgangs erfolgt insbesondere ein Zurücksetzen der Lichtintensität, vorzugsweise auf Lichtintensität I₁.

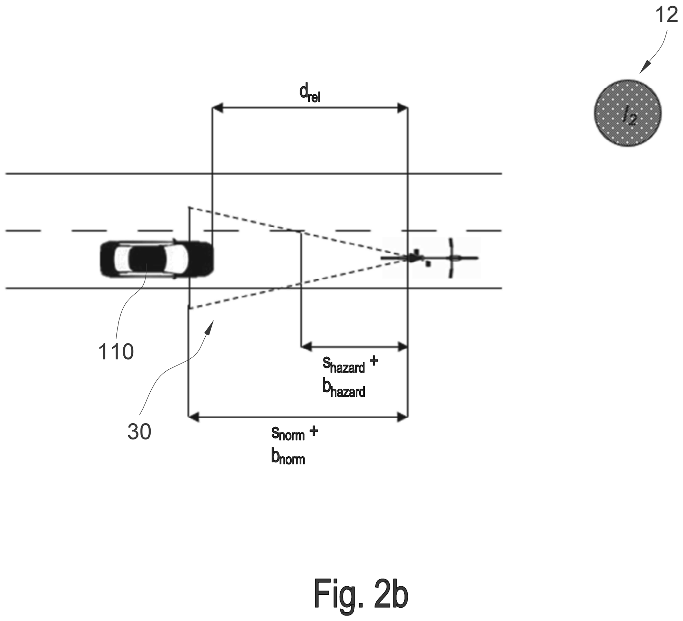

Figur 2b zeigt einen Positionszustand, wobei dᵣₑₗ < sₙₒᵣₘ + bₙₒᵣₘ, jedoch ist dᵣₑₗ größer als der Gefahrbremsweg des Fahrzeugs 110 s_{hazard} plus einem Sicherheitspuffer b_{hazar} für den Gefahrbremsweg des Fahrzeugs 110 (dᵣₑₗ ≥ s_{hazard} + b_{hazard}). Die Leuchte 12 gibt hierbei Rücklicht 22 mit der helleren Lichtintensität I₂ ab. Folglich erfolgt durch das abgegebene Licht mit erhöhter Intensität I₂ eine Warnung an das Fahrzeug 110.

Bevorzugt ist umgesetzt, dass beim Bremsen des Fahrrads 100 in dem Positionszustand aus Figur 2b das von der Leuchte 12 abgegebene Licht kurzfristig für Δt, bspw. 0,3 s, von der helleren Lichtintensität I₂ auf die dunklere Lichtintensität I₁ geändert wird. Nach Δt erfolgt insbesondere eine erneute Abgabe von Licht mit der Intensität l₂. Durch diese kurzfristige Abdunkelung und anschließende Intensivierung ist insbesondere umgesetzt, dass erneut eine Bremswarnfunktion umgesetzt ist.

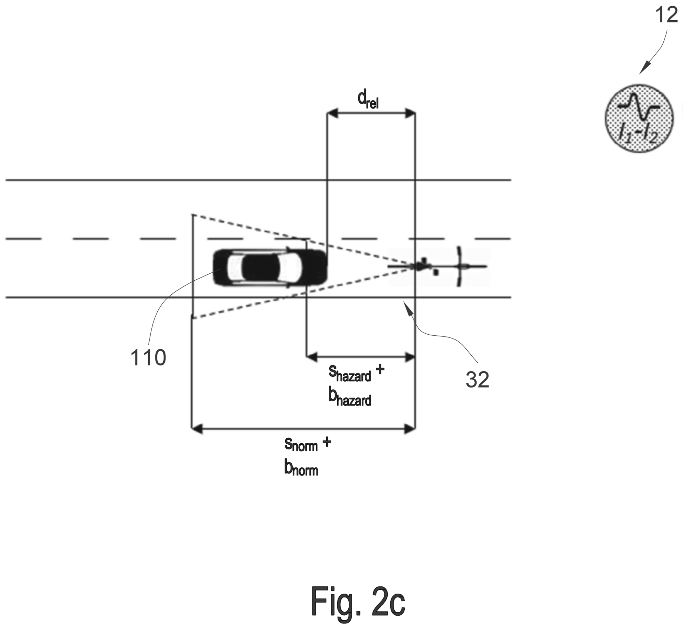

Figur 2c zeigt eine einen Positionszustand, wobei dᵣₑₗ < sₙₒᵣₘ + bₙₒᵣₘ und wobei dᵣₑₗ < s_{hazard} + b_{hazard}. Da somit das Fahrzeug 110 so nah am Fahrrad ist, dass der Gefahrbremsweg plus Puffer unterschritten ist, besteht erhöhte Gefahr, dass ein rechtzeitiges Bremsen des Fahrzeugs 110 nicht mehr möglich ist. Die Leuchte 12 gibt hierbei Rücklicht 22 mit einem Pulsieren zwischen heller Lichtintensität I₂ und dunkleren Lichtintensität I₁, oder ein Blinken ab. Somit kann das Fahrzeug 110 deutlich gewarnt werden.

Wenn sich das Fahrzeug 110 bspw. mit einer Geschwindigkeit von 50 km/h bewegt gilt insbesondere: ${s}_{norm} = \left(50:10\right) \times \left(50:10\right) = 25 m ,$ und ${s}_{hazard} = \left(\left(50:10\right)\times \left(50:10\right)\right) / 2 = 125 , m .$

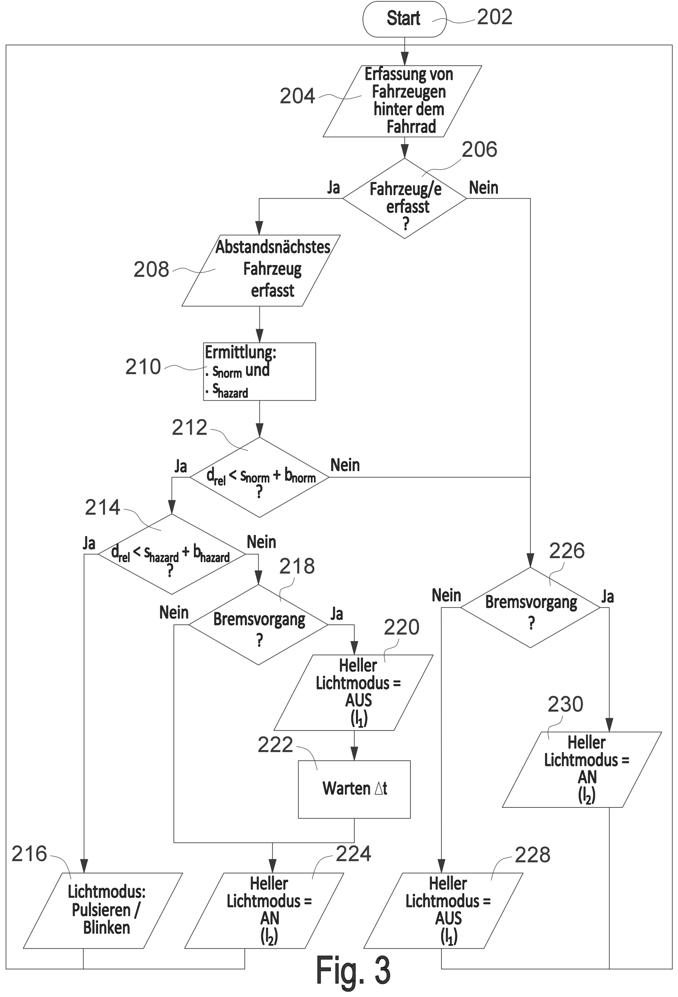

Figur 3 zeigt ein Diagramm zur Darstellung einer bevorzugten Ausführungsform eines erfindungsgemäßen Verfahrens.

Vorzugsweise wird bei Start des Verfahrens eine rückwärtig weisende Beleuchtung in dunklerer Intensität I₁ als Rücklicht für das Fahrrad 100 (vgl. bspw. Figuren 1 oder 2a-c) abgegeben (Start 202).

Es erfolgt ein Erfassen von hinter dem Fahrrad 100 fahrenden Fahrzeugen 110 mittels einer am Fahrrad 100 angeordneten Erfassungsvorrichtung 14 (Schritt 204).

Anschließend erfolgt eine Ermittlung ob mindestens ein Fahrzeug 110 erfasst wurde (Schritt 206).

Sofern dies der Fall ist, wird das abstandsnächste Fahrzeug 110 erfasst (Schritt 208) und für dieses Fahrzeug 110 sₙₒᵣₘ und s_{hazard} ermittelt (Schritt 210).

Im nächsten Schritt (Schritt 212) wird ermittelt, ob der Relativabstand dᵣₑₗ eines hinter dem Fahrrad 100 fahrenden Fahrzeugs 110 < sₙₒᵣₘ + bₙₒᵣₘ ist, wobei bₙₒᵣₘ ein Sicherheitspuffer für den Normalbremsweg des Fahrzeugs 110 ist.

Falls dᵣₑₗ < sₙₒᵣₘ + bₙₒᵣₘ kommt es in einem nächsten Schritt (Schritt 214) zur Ermittlung, ob der Relativabstand dᵣₑₗ des hinter dem Fahrrad 100 fahrenden Fahrzeugs 110 < s_{hazard} + b_{hazard} ist, wobei b_{hazard} ein Sicherheitspuffer für den Gefahrbremsweg des Fahrzeugs 110 ist.

Sofern dᵣₑₗ < s_{hazard} + b_{hazard} erfolgt die Abgabe einer pulsierenden Beleuchtung, wobei insbesondere zwischen der dunkleren Lichtintensität I₁ und der helleren Lichtintensität I₂ gewechselt wird (Schritt 216). Alternativ zu dem Pulsieren kann es insbesondere zu einem Blinken der Beleuchtung oder zu einer Beleuchtung mit einer noch helleren Intensität I₃ als die helle Intensität I₂ kommen.

Sofern jedoch in Schritt 214 ermittelt wurde, dass dᵣₑₗ ≥ s_{hazard} + b_{hazard} wird ermittelt, ob das Fahrrad 100 bremst (Schritt 218).

Bei Vorliegen eines Bremsvorgangs des Fahrrads 100, bspw. bei Erfassung der Betätigung des Bremshebels, erfolgt eine kurzfristige Einstellung von Lichtintensität I₁ (Schritt 220) für eine Zeit Δt (Schritt 222) und anschließend eine Änderung auf Lichtintensität I₂ (Schritt 224). Alternativ zu der kurzfristigen Einstellung von Lichtintensität I₁ und anschließenden Lichtintensität I₂ kann es insbesondere auch zur Einstellung einer Beleuchtung mit einer noch helleren Intensität l₃ als die helle Intensität I₂ kommen.

Auch falls in Schritt 218 ermittelt wurde, dass kein Bremsvorgang vorliegt, kommt es zu einer Einstellung von Lichtintensität I₂.

Sofern in Schritt 206 kein hinter dem Fahrrad 100 fahrendes Fahrzeugen 110 erfasst wurde oder sofern in Schritt 212 ermittelt wurde, dass dᵣₑₗ ≥ sₙₒᵣₘ + bₙₒᵣₘ, wird ermittelt, ob das Fahrrad 100 bremst (Schritt 226).

Bei Vorliegen eines Bremsvorgangs des Fahrrads 100 erfolgt die Einstellung der Lichtintensität l₂ (Schritt 230). Sofern kein Bremsvorgang vorliegt, erfolgt die Einstellung der Lichtintensität I₁ (Schritt 228).

Die Warnleuchtvorrichtung 10 aus Figur 1 ist insbesondere zur Ausführung einer oder mehrere Verfahrensschritte gemäß Figuren 2a-c und/oder gemäß Figur 3 ausgeführt. Das Verfahren der Figur 3 wird insbesondere mit einer Warnleuchtvorrichtung 10 aus Figur 1 oder Figuren 2a-c ausgeführt.

## Patentansprüche

1. Verfahren zur Warnbeleuchtung an einem Fahrrad (100), mit den Schritten:
- Erfassen einer Position eines hinter dem Fahrrad (100) fahrenden Fahrzeugs (110) relativ zum Fahrrad (100) mittels einer am Fahrrad (100) angeordneten Erfassungsvorrichtung (14), und
- Änderung der Intensität einer rückwärtig weisenden Beleuchtung am Fahrrad (100), insbesondere des Rücklichts (22), basierend auf der erfassten Position.

2. Verfahren nach Anspruch 1, **dadurch gekennzeichnet, dass** bei der Änderung der Intensität die Beleuchtung von einer hellen zu einer dunkleren Beleuchtungsintensität oder von einer dunklen zu einer helleren Beleuchtungsintensität geändert wird.

3. Verfahren nach Anspruch 1 oder 2, **dadurch gekennzeichnet, dass** die Erfassungsvorrichtung (14) die Geschwindigkeit vᵥₑₕ des Fahrzeugs (110), die Geschwindigkeit v_{bike} des Fahrrads (100) und/oder eine Relativgeschwindigkeit vᵣₑₗ zwischen Fahrrad (100) und Fahrzeug erfasst.

4. Verfahren nach einem der Ansprüche 1-3, **dadurch gekennzeichnet, dass** die Erfassungsvorrichtung (14) den Relativabstand dᵣₑₗ zwischen Fahrzeug und Fahrrad (100) und bevorzugt eine Abstandsänderung erfasst.

5. Verfahren nach Anspruch 4, **dadurch gekennzeichnet, dass** bei Erfassung eines Wechsels zwischen
dᵣₑₗ ≥ sₙₒᵣₘ + bₙₒᵣₘ und dᵣₑₗ < sₙₒᵣₘ + bₙₒᵣₘ,
eine Änderung der Intensität der Beleuchtung erfolgt, wobei sₙₒᵣₘ ein Normalbremsweg des Fahrzeugs (110), und
bₙₒᵣₘ ein Sicherheitspuffer für den Normalbremsweg des Fahrzeugs (110) ist.

6. Verfahren nach Anspruch 4 oder 5, **dadurch gekennzeichnet, dass** bei Erfassung eines Wechsels zwischen
dᵣₑₗ **≥** s_{hazard} + b_{hazard} und dᵣₑₗ **<** s_{hazard} + b_{hazard},
eine Änderung der Intensität der Beleuchtung, erfolgt, wobei sₙₒᵣₘ ein Gefahrbremsweg des Fahrzeugs (110), und
bₙₒᵣₘ ein Sicherheitspuffer für den Gefahrbremsweg des Fahrzeugs (110) ist.

7. Verfahren nach einem der Ansprüche 1-6, **dadurch gekennzeichnet, dass** bei einem Bremsen des Fahrrads (100) eine, insbesondere kurzfristige, Änderung der Intensität der Beleuchtung erfolgt.

8. Verfahren nach einem der Ansprüche 1-7, **dadurch gekennzeichnet, dass** bei einer Erfassung von dᵣₑₗ < s_{hazard} + b_{hazard} und/oder während eines Bremsvorgangs des Fahrrads (100), wobei
sₙₒᵣₘ ein Gefahrbremsweg des Fahrzeugs (110), und
bₙₒᵣₘ ein Sicherheitspuffer für den Gefahrbremsweg des Fahrzeugs (110) ist,
ein Pulsieren der Beleuchtung erfolgt.

9. Verfahren nach einem der Ansprüche 1-8, **dadurch gekennzeichnet, dass** die Erfassungsvorrichtung (14) den seitlichen Abstand der Fahrspur des Fahrzeugs (110) zur Fahrspur des Fahrrads (100) erfasst, wobei es bevorzugt ist,
dass bei Erfassung eines Abstands der Fahrspuren zueinander ≥ eines Mindestabstands, insbesondere von 2 m oder 1,5 m, eine Änderung der Intensität der Beleuchtung unterbleibt.

10. Verfahren nach einem der Ansprüche 1 bis 9, **dadurch gekennzeichnet, dass** das Verfahren den weiteren Schritt der Übermittlung der erfassten Position, vorzugsweise an den Benutzer des Fahrrads (100), aufweist; und/oder **dadurch gekennzeichnet, dass** die Erfassungsvorrichtung (14) zur Erfassung der Position des Fahrzeugs (110) einen Radar-Sensor, Ultraschall-Sensor, einen Lidar-Sensor, eine Kamera, und/oder einen Infrarot-Sensor aufweist.

11. System zur Datenverarbeitung, umfassend Mittel zur Ausführung des Verfahrens nach einem der Ansprüche 1 bis 10.

12. Warnleuchtvorrichtung (10) für ein Fahrrad (100), mit einer Erfassungsvorrichtung (14) zum Erfassen einer Position eines hinter dem Fahrrad (100) fahrenden Fahrzeugs (110) relativ zum Fahrrad (100), und
einer Steuerungseinheit (18), vorzugsweise ein System zur Datenverarbeitung gemäß Anspruch 11, die dazu eingerichtet ist die Intensität eines vom Fahrrad abgegebenen Lichts (22), insbesondere Rücklichts, basierend auf der erfassten Position zu ändern, wobei vorzugsweise:
die Warnleuchtvorrichtung (10) ferner ein Gehäuse (16) aufweist, wobei die Erfassungsvorrichtung (14), die Steuereinheit (18) und insbesondere eine Leuchte (12) zur Abgabe des Lichts (22), zumindest teilweise, in dem Gehäuse (16) angeordnet sind.

13. Fahrrad (100) mit einer Warnleuchtvorrichtung (10) nach Anspruch 12 oder 13, **dadurch gekennzeichnet, dass** die Warnleuchtvorrichtungmit dem Fahrrad (100) verbunden ist oder in ein Rahmenelement des Fahrrads (100) integriert ist.

14. Computerprogramm, umfassend Befehle, die bei der Ausführung des Programms durch einen Computer diesen veranlassen, das Verfahren nach einem der Ansprüche 1 bis 10 auszuführen.

15. Computerlesbares Speichermedium, wobei das Speichermedium Befehle umfasst, die bei der Ausführung durch einen Computer diesen veranlassen, das Verfahren nach einem der Ansprüche 1 bis 10 auszuführen, und/oder auf dem Speichermedium das Computerprogramm nach Anspruch 15 gespeichert ist.
